# EUROPEAN PATENT APPLICATION

(11) **EP 1 683 653 A2**
(43) Date of publication of application: **26.07.2006**
(21) Application number: 05016501.8
(22) Date of filing: 29.07.2005
(51) Int. Cl.: B60B 15/26

(54) **Device for driven vehicle wheels in order to improve traction on snow and ice**

(30) Priority: 24.01.2005 IT PC20050005
(71) Applicant: C.S. S.r.l., 29021 Bettola PC (IT)
(72) Inventor: Costa, Roberto, 29021 Bettola (PC) (IT)
(74) Representative: La Ciura, Salvatore

(57) **Abstract**

A device designed to be fitted to vehicle wheels to increase their roadholding in the presence of snow or ice, which includes a support (2) on which are fitted a plurality of spikes (3) which, when said support is mounted on said wheel (14), are located in a radial position projecting from the external circumference of the tyre, so that when said tyre touches the snow- or ice-covered ground, said spikes penetrate into said snow- or ice-covered ground. The device includes a hub (4) designed to be attached to vehicle wheel (14) with bolts screwed into the same threaded holes as the support of said wheel (14), which said hub (4) presents threaded holes (16) into which bolts used to secure said support (2) (2a) of said spikes (3) are screwed.
Said hub (4) comprises:
- a hole (15) into which a centring pin present on the support of wheel (14) is inserted to aid mounting of said wheel (14);
- a hole (16) into which the head of a fixing bolt of wheel (14) is inserted, which said bolt is kept screwed down;
- threaded holes (16) into which bolts are screwed to fit said support (2), (2a) of said spikes (3).

## Description

This invention relates to a device designed to be fitted to the drive wheels of vehicles to increase the roadholding of said wheels in the presence of snow or ice.

According to the current state of the art, the problem of roadholding on snow- or ice-covered roads has been dealt with by fitting "chains" to the tyres in common use.

The drawbacks of chains are well known, namely the difficulty encountered when said chains need to be fitted at night or while it is snowing, and during their use, because the driver is obliged to drive slowly and the vehicle is subject to vibration, jolting, wear, and more frequent breakage of the most exposed mechanical parts.

Problems of accentuated wear also affect the road surface.

The prior art offers other solutions, such as additional rubber strips to be fitted to tyres, tyres with special tread for driving on snow, and spiked tyres for driving on ice.

The same comments apply to additional rubber strips as to chains. Special tyres effectively solve the problem of road holding on snow and ice, but due to the difficulty of fitting and removal tend to remain fitted throughout the winter, and when the car is driven on tarmac their performance is considerably inferior to that of ordinary tyres.

This invention at least partly solves the problems of the prior art by offering a device, as claimed in claim 1, designed to be fitted very quickly to the drive wheels, which said device comprises a plurality of spikes that are rendered integral with said drive wheels, which said spikes are kept pressed against the snow- or ice-covered surface by steel springs or another device designed to generate a thrust sufficient to cause said spike to adhere to said snow- or ice-covered surface.

As will appear clearly from the description below, said device is particularly easy to fit to the vehicle wheels, and driving of the vehicle is smoother, with no significant vibrations.

When driving on tarmac, the problems characteristic of chains are considerably attenuated because, as will be seen, when the pressure exerted by the springs is overcome, the spikes retract into their seatings, thus minimising the effects of shocks against the tarmac.

The invention will now be described in detail, by way of example but not of limitation, by reference to the annexed figures, wherein:
- figures 1 (a, b) show two views of a device according to the invention;
- figures 2 (a, b) show a cross-section, illustrating in particular a spike pressed by a helical spring;
- figures 3 (a, b) show a cross-section, illustrating in particular a spike pressed by an elastomer material;
- figures 4 and 5 show a spike, the guide element and the elements that exert the pressure;
- figures 6 (a, b) show the fitting of a spike with elastomer presser;
- figures 7 (a, b) show an oscillating spike;
- figure 8 shows different embodiments of the spike;
- figure 9 shows the device according to the invention fitted to a wheel;
- figure 10 is an exploded view showing how the device is mounted on the wheel ;
- figure 11 shows two views of the wheel hub;
- figure 12 shows a different method of mounting the device on the wheel.

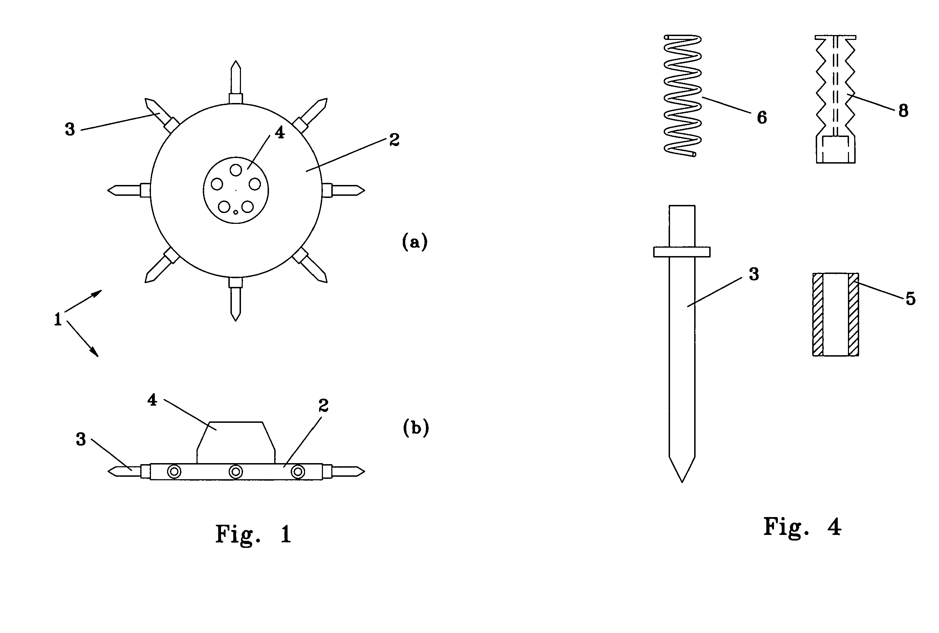

In fig. 1, no. (1) indicates a device according to the invention, shown according to a side view (fig. 1 a) and a front view (fig. 1b). Said device (1) comprises a support (2) on which a plurality of spikes (3), for example eight, are fitted so as to slide along their axis. Said support or spike wheel (2) can be made, for example, of aluminium alloy, while spikes (3) can conveniently be made of case-hardened, toughened steel.

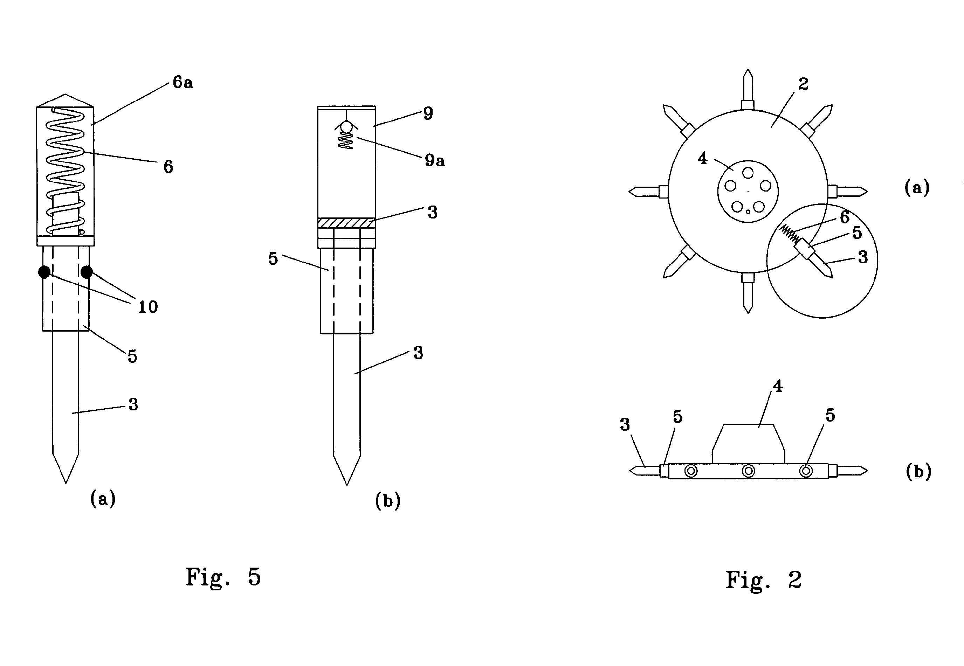

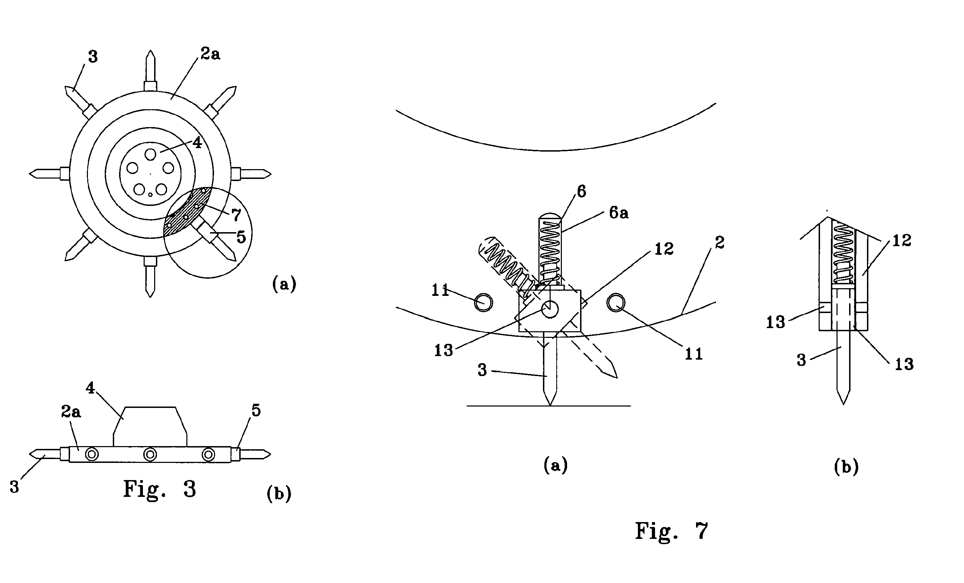

Figs. 2 (a, b) show said spikes (3) which run in bushings (5) fitted to said support (2), which said spikes are pressed towards the outside by elastic means, such as helical springs (6) or an elastomer (7). Fig. 3a shows said elastomer (7) contained in a circular seating fitted in a support (2a).

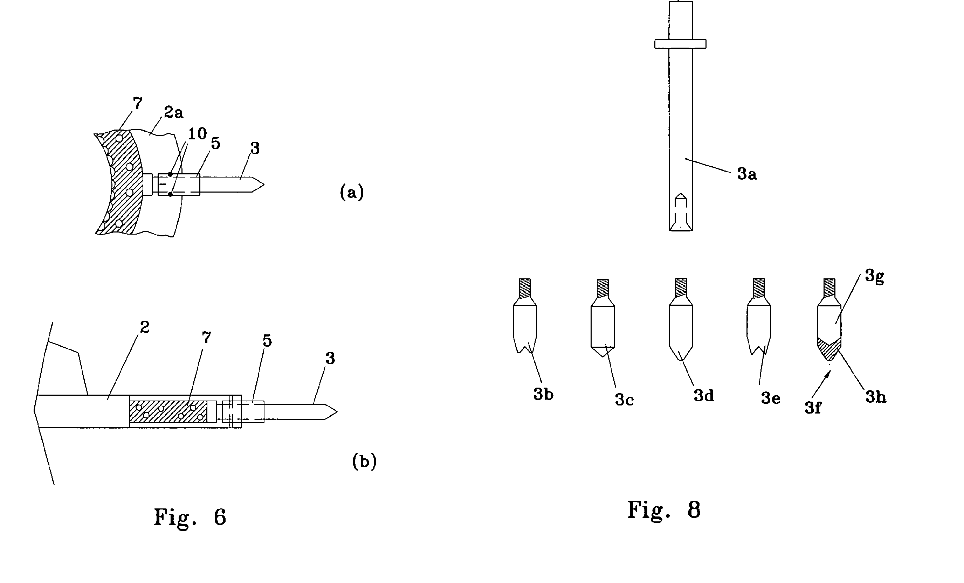

Fig. 4 shows in detail said spike (3), said bushing (5), inside which said spike (3) slides, and said elastic contrast means which can take the form of a helical spring (6), as described, or a buffer (8) made of elastomer material. In this case said buffer (8) is again inserted into a casing (6a), integral with bushing (5), which provides the rear support for said elastomer buffer (8). Said bushing could be made of bronze, bakelite or teflon, for example, while said elastomer material could be a hard natural rubber or a synthetic rubber such as adipol or fibroflex.

Fig. 5a shows said spike (3), inserted so that it slides in said bushing (5) and is subject to the elastic thrust of said helical spring (6), which is contained in a casing (6a) fitted to said bushing (5), and which said casing provides the rear support for said helical spring (6). A possible method of fitting bushing (5) to spike wheel (2) is also illustrated, namely via a pair of pins (10) which are inserted into holes close to the circumference of said wheel (2) and engage with the grooves in said bushing (5).

Fig. 5b again shows spike (3) inserted into a bushing (5), but subject to the action of elastic means of pneumatic type such as a gas spring, obtained via the rear part (3a) of the spike which is shaped like a piston and slides inside a cylinder (9) that contains a gas, such as nitrogen, at a pressure ranging between approximately 5 bars and a maximum of 150 bars, forming a seal between said piston (3a) and said cylinder (9). The gas can be inserted into cylinder (9) through a filling valve (9a).

Figs. 6 (a, b) show two views of a spike (3) which slides in a bushing (5) and is subject to the thrust of said elastomer (7), inserted in a circular seating of spike wheel (2a), which said bushing (5) is locked by said two pins (10) inserted in wheel (2a), which engage with the grooves in bushing (5).

According to a preferred form of embodiment, said spikes (3) can made to oscillate in relation to spike wheel (2). This can be done as illustrated in figs. 7 (a, b), which show a spike (3) inserted in a bushing (12) with the external shape of a parallelepiped. The casing (6a) of helical spring (6) which acts on said spike (3) is fitted to said bushing (12). The oscillation is obtained via a pin (13) which connects said bushing (12) to spike wheel (2) and can be locked by tightening bolts (11).

If the spikes are rotated through 40 - 45 degrees, they no longer interfere with the tarmac. This operation is useful when ice- or snow-covered ground gives way to a stretch of clear tarmac, but the driver expects to return to ice-or snow-covered ground shortly. This means that there is no need to remove the entire device from the wheel.

Fig. 8 shows a possible variation on spike (3), which comprises a rod (3a) with a stem screwed onto the end. Said stem can have various shapes, depending on the terrain on which the vehicle is to be driven. By way of example but not of limitation, said stem could take the form of a double, triple or quadruple rounded tip (3b), a single sharp tip (3c) or rounded tip (3d), or a double, triple or quadruple sharp tip (3e). The stem could also have shape (3f), which comprises a steel part (3g) screwed onto rod (3a) and a rubber part (3h). This solution may be useful in the very frequent case of driving on snow-covered but not icy ground alternating with relatively clear stretches of tarmac, in order to protect the road surface against damage caused by the case-hardened steel stems.

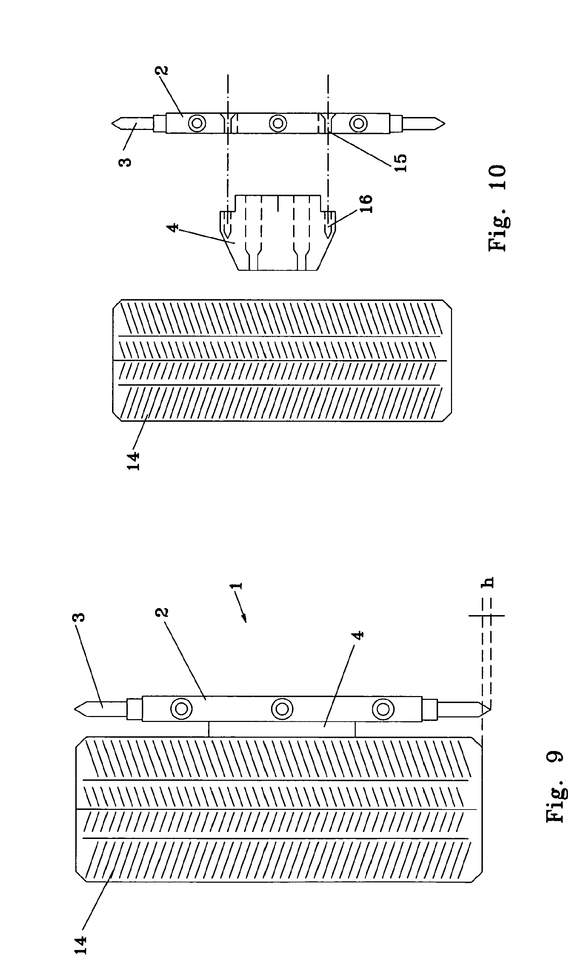

Fig. 9 shows device (1) according to the invention fitted to a vehicle wheel (14).

Under the weight of vehicle, the tyre is flattened at the bottom by 8 - 15 mm. Consequently, if spikes (3) are positioned in relation to spike wheel (2) so as to identify a diameter equal to the diameter of the tyre, they will project from the circumference of said tyre at the bottom by an amount s equal to the flattening of the tyre. When the vehicle drives over ice- or snow-covered ground, the spike will penetrate by quantity s, less than the shortening of pressure spring (6).

Fig. 10 shows an exploded view of the device according to the invention fitted to a vehicle wheel, showing how hub (4) is inserted between said wheel (14) and said spike wheel (2), which self-centres onto said hub (4) and is secured to it with screws that are inserted into holes (15) in spike wheel (2) and screwed into the threaded holes (16) in the hub. Said screws preferably have a conical locking seating in order to prevent loosening caused by rotation and vibrations.

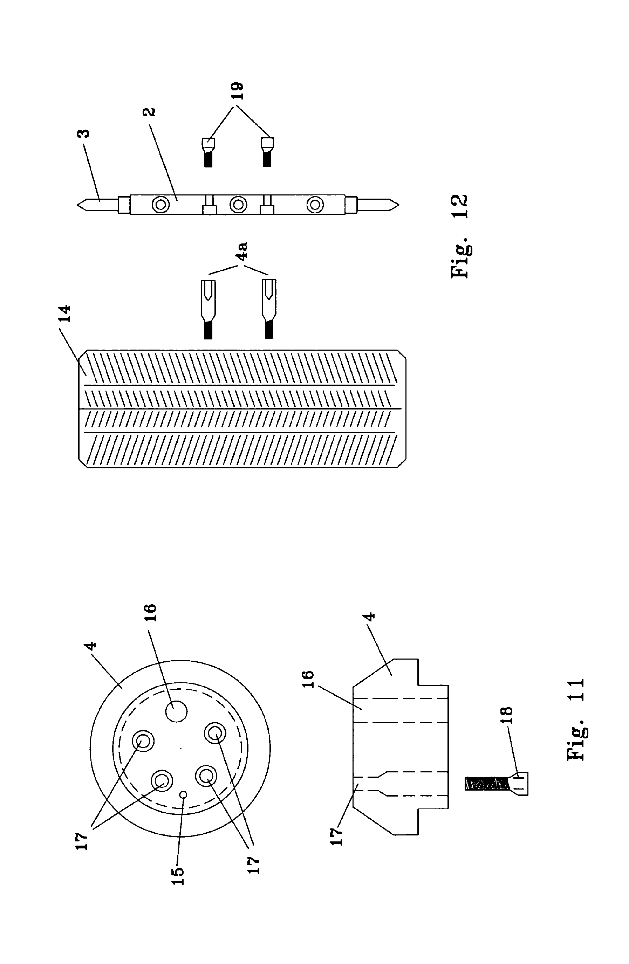

All but one of the holes used to secure the wheel are employed to fit the device according to the invention to the vehicle wheel. Fig. 11 shows the frequent case of a wheel fitted with five bolts.

The wheel is fitted to its support using a centring pin. If all the bolts are then removed, apart from the one opposite to said centring pin, the wheel (obviously with the vehicle stationary) remains firmly in position, due to the friction exerted by the remaining bolt and the cooperation of said pin, which, in the case of fixing with five bolts, is in the position diametrically opposite to said bolt which remains screwed down. At this point hub (4) can be fitted to the wheel, using for centring purposes a hole (15) into which the end of the centring pin that projects from the sheet metal with which the circle is made is inserted, and a hole (16) into which the head of the bolt that remains screwed down is inserted.

Bolts (18) which are screwed into the threaded seatings of the bolts previously used will be inserted into holes (17) in hub (4). Said bolts (18) will obviously be longer than those previously used to fit the wheel alone.

Hub (4) can be fitted alone, as in the case illustrated, followed by fitting of spike wheel (2) to hub (4). Alternatively, spike wheel (2) can be premounted on hub (4), and the assembly formed by wheel (2) and hub (4) can be mounted on the vehicle wheel.

Fig. 12 shows an alternative to the use of hub (4), which can be replaced by bolts (4a) that are screwed instead of the bolts used to fit wheel (14) to its support. Inside said bolts (4a) there is a thread into which bolts (19) are screwed to secure spike wheel (2).

The above description clearly demonstrates that the fitting of the device according to the invention is particularly easy. Among other things, the hub can be pre-fitted at the beginning of winter, and the spike wheel only needs to be fitted when required, thus further reducing the installation time.

As the spikes are mounted on elastic supports, vibrations and jolting of the vehicle are considerably reduced, with consequent advantages for driving comfort and the duration of the mechanical components of the suspension. Moreover, as the spikes have a rounded or hard rubber-covered tip, they do not damage the road surface if the vehicle is driven on clear tarmac.

The device according to the invention is described herein by way of example but not of limitation, according to a preferred form of embodiment and some possible variations. One skilled in the art could devise numerous other variations, all of which should be deemed to fall within the ambit of protection of the claims set out below.

## Claims

1. Device designed to be fitted to vehicle wheels to increase their roadholding in the presence of snow or ice, **characterised in that** it includes a support (2) on which are fitted a plurality of spikes (3) which, when said support is mounted on said wheel (14), are located in a radial position projecting from the external circumference of the tyre, so that when said tyre touches the snow- or ice-covered ground, said spikes penetrate into said snow- or ice-covered ground.

2. Device as claimed in claim 1, **characterised in that** said spikes (3) are fitted in such a way as to slide along their axis, being inserted in bushings (5) integral with said support (2), and that elastic contrast means which press said spikes (3) outwards to aid penetration of said spikes (3) into the snow or ice on which the tyre rests are fitted.

3. Device as claimed in claim (2), **characterised in that** said elastic contrast means comprise a helical spring (6) inserted in a casing (6a), integral with said bushing (5), which supplies the rear support for said helical spring (6).

4. Device as claimed in claim (2), **characterised in that** said elastic contrast means comprise an elastomer buffer (8) inserted in a casing (6a), integral with said bushing (5), which provides the rear support for said elastomer buffer (8).

5. Device as claimed in claim (2), **characterised in that** said elastic contrast means comprise a gas spring, obtained by designing the rear part (3a) of said spike (3) as a piston that slides inside a sealed cylinder (9) which contains a pressurised gas, said cylinder (9) being integral with said bushing (5).

6. Device as claimed in claim (2), **characterised in that** said elastic contrast means comprise an elastomer buffer (7, 8) inserted in a circular cavity in a support (2a) so that said buffer (7, 8) is in contact with the rear part of said spikes (3).

7. Device as claimed in claim 2, **characterised in that** said spikes (3) slide inside bushings (12) which oscillate around a pin (13) with an axis perpendicular to the surface of said support (2), in such a way that they can be inclined so as not to interfere with the tarmac if the car drives over stretches of road not covered with snow or ice, and that said spikes can be locked in the position chosen (interference or non-interference with the tarmac), locking means designed to lock said bushing (12) against said support (2) by friction being provided.

8. Device as claimed in at least one of claims 1 to 7, **characterised in that** said spikes (3) comprise a part (3a) which slides inside said bushings (5) and (12), to which a stem (3b), (3c), (3d), (3e) or (3f) is screwed.

9. Device as claimed in at least one of claims 1 to 8, **characterised in that** it includes a hub (4) designed to be attached to vehicle wheel (14) with bolts screwed into the same threaded holes as the support of said wheel (14), which said hub (4) presents threaded holes (16) into which bolts used to secure said support (2) (2a) of said spikes (3) are screwed.

10. Device as claimed in claim 9, **characterised in that** said hub (4) comprises:
• a hole (15) into which a centring pin present on the support of wheel (14) is inserted to aid mounting of said wheel (14);
• a hole (16) into which the head of a fixing bolt of wheel (14) is inserted, which said bolt is kept screwed down;
• threaded holes (16) into which bolts are screwed to fit said support (2), (2a) of said spikes (3).

11. Device as claimed in at least one of claims 1 to 9, **characterised in that** it includes bolts (4a) which are screwed instead of the bolts used to mount wheel (14) on its support, said bolts (4a) presenting a thread into which bolts (19) are screwed to secure the support of spikes (2), (2a).
